(19) Europäisches Patentamt
European Patent Office
Office européen des brevets

(11) EP 4 301 814 B1

(12) # EUROPEAN PATENT SPECIFICATION

(45) Date of publication and mention of the grant of the patent:
**24.12.2025 Bulletin 2025/52**

(21) Application number: **22763631.3**

(22) Date of filing: **04.03.2022**

(51) International Patent Classification (IPC):
***C08L 83/04*** *(2006.01)* ***C08L 83/06*** *(2006.01)*
***C08G 77/14*** *(2006.01)* ***C08G 77/20*** *(2006.01)*
***C08K 5/23*** *(2006.01)* ***C08K 5/00*** *(2006.01)*
***C09D 183/06*** *(2006.01)* ***C09D 7/40*** *(2018.01)*
***C09D 7/41*** *(2018.01)*

(52) Cooperative Patent Classification (CPC):
(C-Sets available)
**C08L 83/06; C09D 7/41; C09D 183/06;**
C08G 77/045; C08G 77/14 (Cont.)

(86) International application number:
**PCT/KR2022/003078**

(87) International publication number:
**WO 2022/186650 (09.09.2022 Gazette 2022/36)**

(54) **CURABLE SILICONE COMPOSITION**
HÄRTBARE SILIKONZUSAMMENSETZUNG
COMPOSITION DURCISSABLE DE SILICONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2021 KR 20210029560**

(43) Date of publication of application:
**10.01.2024 Bulletin 2024/02**

(73) Proprietor: **Dow Silicones Corporation**
**Midland, Michigan 48686 (US)**

(72) Inventors:
- **LEE, Gyuyoung**
**Jincheon-gun, Chungcheongbuk-do 27807 (KR)**
- **CHON, Jina**
**Jincheon-gun, Chungcheongbuk-do 27807 (KR)**

(74) Representative: **Murgitroyd & Company**
**165-169 Scotland Street**
**Glasgow G5 8PL (GB)**

(56) References cited:
**EP-A1- 3 760 660**
**KR-A- 20160 127 084**
**KR-A- 20170 113 220**
**KR-A- 20200 053 559**
**KR-A- 20200 118 555**
**US-A1- 2010 103 507**
**US-A1- 2010 103 507**
**US-A1- 2014 154 626**
**US-A1- 2014 154 626**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 301 814 B1

(52) Cooperative Patent Classification (CPC): (Cont.)

C-Sets
**C08L 83/06, C08L 83/00, C08K 5/235, C08K 5/55**

## Description

### Technical Field

The present invention relates to a curable silicone composition.

### Background Art

Recently, black gapfill materials are used for LED display applications to enhance color tone and clearness. For example, black gapfill materials are typically used to fill a pixel pitch gap and a gap between LED chips, with the same height as the LED chip to provide smooth overall display surface. The main purpose of black gapfill materials is to absorb lights that are not emitting vertically from the display panel. The side-directional lights can interfere with each other and reduce clearness and brightness of the display applications. This light absorbing performance, namely shading property, is expressed as an average Optical Density (OD) values from visible range wavelengths (360 nm to 740 nm). In general, this application requires average OD value greater than or equal to 2, which means that the lights will be absorb at least 99% or more.

Silicone gapfill materials are used in the conventional LED/LCD chips with typical heights between 0.4 mm to 1.6 mm. Due to the sufficient height of the LED/LCD chip package, these silicone gapfill materials were able to satisfy target OD values by using carbon black as a colorant. Patent document 1 describes a curable silicone composition comprising: an organopolysiloxane having at least two alkenyl groups per molecule, an organohydrogenpolysiloxane having at least two silicon atom-bonded hydrogen atoms per molecule, a carbon black pigment, and a platinum catalyst.

However, as the LEDs are getting smaller and thinner, these silicone gapfill materials could not be used for black gapfill materials for Micro/Mini LED Applications. The height of the micro LED package got reduced to 0.1 mm thickness, which means that the black gapfill material needs to have OD value greater than or equal to 2 with 0.1 mm thickness. Furthermore, to meet the light observing performance (OD value > 2), additional carbon black was introduced in the formulation during the trials. However, excess amount of carbon black caused severe sedimentation and separation issues during the storage condition and clogging issues during the use. The sedimentation/ separation cause non-uniform black appearance, causing light transmittance variation within the samples. The clogging phenomenon causes processability concerns at the dispensing lines.

Patent document 2 describes a curable silicone composition comprising: an organopolysiloxane having at least two alkenyl groups per molecule, an organohydrogenpolysiloxane having at least two silicon atom-bonded hydrogen atoms per molecule, an azo dye, and a platinum catalyst. When the black gapfill materials require OD with thin material's thickness, black dyes are used to prevent the sedimentation issues. However, most of the dyes are hydrophilic, which are not compatible with organic and inorganic polymers. There are hydrophobic azo dyes that are compatible with organic polymers, but they are not compatible with silicone matrix. Many prior arts utilize solvent to dissolve black dyes in silicone formulation. Solvents are widely used to dissolve azo dyes with silicone polymers. However, solvents cause material shrinkage during the cure process, which could cause un-even thickness and warpage of the material. The drying of solvents also causes the "Mura" effect, making dirty surface around cured area.

While, Patent document 3 describes a curable silicone composition having good transparency and comprising: an epoxy-functional organopolysiloxane resin; an epoxy-functional organosiloxane oligomer, and a cationic photoinitiator, wherein the composition can be cured by irradiation with UV ray. However, Patent document 3 fails to teach addition of a black azo dye because of poor transparency.

Patent document 4 describes a UV-curable silicone composition used for preparing coatings and adhesives and comprising an epoxy-functionalised polysiloxane comprising M, D and T units, a di-epoxy compound and a photoacid generator. The epoxy-functionalised polysiloxane may also contain T units and the composition may also comprise additional components such as pigments.

[Prior Art Documents]

[Patent Documents]

Patent Document 1: United States Patent Application Publication No. 2007/0287771 A1
Patent Document 2: United States Patent Application Publication No. 2010/0103507 A1
Patent Document 3: United States Patent Application Publication No. 2014/0154626 A1
Patent document 4: European Patent Application publication No. 3 760 660 A.

## Disclosure of Invention

### Technical Problem

An objective of the present invention is to provide a curable silicone composition which has excellent storage stability, and cures to form a cured product exhibiting good to excellent shading property without causing shrinkage and "MURA" defects.

### Solution to Problem

The curable silicone composition of the present invention comprises:

(A) an epoxy-functional organopolysiloxane resin represented by the following average unit formula:

$$(R'_3SiO_{1/2})_a(R'_2SiO_{2/2})_b(R'SiO_{3/2})_c(SiO_{4/2})_d$$

wherein each $R^1$ is the same or different organic group selected from a $C_{1-6}$ monovalent aliphatic hydrocarbon group, a $C_{6-10}$ monovalent aromatic hydrocarbon group, and a monovalent epoxy-substituted organic group, provided that at least about 15 mol% of the total $R^1$ are the $C_{6-10}$ monovalent aromatic hydrocarbon groups; and "a", "b", "c", and "d" are numbers that satisfy the following conditions: $0 \le a < 0.4$, $0 < b < 0.5$, $0 < c < 1$, $0 \le d < 0.4$, $0.1 \le b/c \le 0.6$, and $a+b+c+d=1$; and about 2 to about 30 mol% of the total siloxane units have the monovalent epoxy-substituted organic groups;

(B) an epoxy-functional organosiloxane oligomer represented by the following general formula:

$$X^1\text{-}R^2_2SiO(SiR^2_2O)_mSiR^2_2\text{-}X^1$$

wherein each $R^2$ is the same or different organic group selected from a $C_{1-6}$ monovalent aliphatic hydrocarbon group and a $C_{6-10}$ monovalent aromatic hydrocarbon group; each $X^1$ is the same or different monovalent epoxy-substituted organic group; and "m" is a number of from about 0 to about 100, in an amount of from about 5 mass% to about 80 mass% of the total mass of components (A), (B), (C) and (D);

(C) a photoacid generator and/or a thermal acid generator, in an amount of from about 0.01 mass% to about 5 mass% of the total mass of components (A), (B), (C) and (D); and

(D) a black azo dye, in an amount of from about 0.1 mass% to about 5 mass% of the total mass of components (A), (B), (C) and (D).

In various embodiments, the monovalent epoxy-substituted organic groups in component (A) are groups selected from glycidoxyalkyl groups, 3,4-epoxycyclohexylalkyl groups, and epoxyalkyl groups.

In various embodiments, the monovalent epoxy-substituted organic groups in component (B) are groups selected from glycidoxyalkyl groups, 3,4-epoxycyclohexylalkyl groups, and epoxyalkyl groups.

In various embodiments, component (B) is an epoxy-functional organosiloxane oligomer represented by the following general formula:

$$X^1\text{-}R^2_2SiOSiR^2_2\text{-}X^1$$

wherein $R^2$ and $X^1$ are as described above.

In various embodiments, component (D) is selected from Solvent Black 3, Solvent Black 27, Solvent Black 28, Solvent Black 29, Solvent Black 34, Solvent Black 43 and Solvent Black 46.

### Advantageous Effects of Invention

The curable silicone composition of the present invention exhibits good to excellent storage stability, and cures to form a cured product exhibiting good to excellent shading property without causing shrinkage and "MURA" defects.

### Mode for the Invention

The terms "comprising" or "comprise" are used herein in their broadest sense to mean and encompass the notions of "including," "include," "consist(ing) essentially of," and "consist(ing) of." The use of "for example," "e.g.," "such as," and "including" to list illustrative examples does not limit to only the listed examples. Thus, "for example" or "such as" means "for example, but not limited to" or "such as, but not limited to" and encompasses other similar or equivalent

examples. The term "about" as used herein serves to reasonably encompass or describe minor variations in numerical values measured by instrumental analysis or as a result of sample handling. Such minor variations may be in the order of $\pm$0-25, $\pm$0-10, $\pm$0-5, or $\pm$0-2.5, % of the numerical values. Further, the term "about" applies to both numerical values when associated with a range of values. Moreover, the term "about" may apply to numerical values even when not explicitly stated. Generally, as used herein a ">" is "above" or "greater-than"; a "≥" is "at least" or "greater-than or equal to"; a "<" is "below" or "less-than"; and a "≤" is "at most" or "less-than or equal to."

The terms "epoxy-functional" or "epoxy-substituted" as used herein refers to a functional group in which an oxygen atom, the epoxy substituent, is directly attached to two adjacent carbon atoms of a carbon chain or ring system. Examples of epoxy-substituted functional groups include, but are not limited to, glycidoxyalkyl groups such as 2-glycidoxyethyl groups, 3-glycidoxypropyl groups, 4-glycidoxybutyl groups or the like; (3,4-epoxycycloalkyl)alkyl groups such as 2-(3,4-epoxycylohexyl)ethyl groups, 3-(3,4-epoxycylohexyl)propyl groups, 2-(3,4-epoxy-3-methylcylohexyl)-2-methylethyl groups, 2-(2,3-epoxycylopentyl)ethyl groups, 3-(2,3-epoxycylopentyl)propyl groups, and the like; and epoxyalkyl groups such as 2,3-epoxypropyl groups, 3,4-epoxybutyl groups, 4,5-epoxypentyl groups, and the like.

The terms "MURA" or "MURA defects" as used herein refers to contrast-type defects, where one or more pixels is brighter or darker than surrounding pixels, when they should have uniform luminance. For example, when an intended flat region of color is displayed, various imperfections in the display components may result in undesirable modulations of the luminance. Mura defects are generally non-uniformity distortions. Generically, such contrast-type defects may be identified as "blobs", "bands", "streaks", etc.

The terms "OD" or "Optical Density" as used herein are meant to indicate shading property. A value of "OD" is represented by the following equation:

$$OD = -\log (I_T/I_0)$$

wherein $I_0$ is an intensity of light incident on an optical density-changing element; and $I_T$ is an intensity of transmitted light. That is, when the value of "OD" becomes large, it's meant that shading property will be better.

<Curable silicone composition>

Component (A) is an epoxy-functional organopolysiloxane resin represented by the following average siloxane unit formula:

$$(R^1{}_3SiO_{1/2})_a(R^1{}_2SiO_{2/2})_3(R^1SiO_{3/2})_c(SiO_{4/2})_d.$$

In the formula, each $R^1$ is the same or different organic group selected from a $C_{1-6}$ monovalent aliphatic hydrocarbon group, $C_{6-10}$ monovalent aromatic hydrocarbon group, and a monovalent epoxy-substituted organic group.

Examples of the $C_{1-6}$ monovalent aliphatic hydrocarbon groups in component (A) include $C_{1-6}$ alkyl groups such as methyl groups, ethyl groups, propyl groups, butyl group, and hexyl groups; $C_{2-6}$ alkenyl groups such as vinyl groups, allyl groups, and hexenyl groups; and $C_{1-6}$ halogenated alkyl groups such as 3-chloropropyl groups and 3,3,3-trifluoropropyl groups. Among these, methyl groups are generally preferred.

Examples of the $C_{6-10}$ monovalent aromatic hydrocarbon groups in component (A) include phenyl groups, tolyl groups, xylyl groups, and naphthyl groups. Among these, phenyl groups are generally preferred.

Examples of the monovalent epoxy-substituted organic groups in component (A) include glycidoxyalkyl groups such as 3-glycidoxypropyl groups, 4-glycidoxybutyl groups and 5-glycidoxypentyl groups; 3,4-epoxycycloalkyl alkyl groups such as 2-(3,4-epoxycyclohexyl)ethyl, 3-(3,4-epoxycyclohexyl)propyl, 2-(3,4-epoxy-3-methylcyclohexyl)-2-methylethyl, 2-(2,3-epoxycyclopentyl)ethyl, and 3-(2,3-epoxycyclopentyl)propyl; and epoxyalkyl groups such as 2,3-epoxypropyl groups, 3,4-epoxybutyl groups, and 4,5-epoxypentyl groups. Among these, 3,4-epoxycycloalkyl alkyl groups are generally preferred.

In component (A), at least about 15 mol%, optionally at least about 20 mol%, or optionally at least about 25 mol%, of the total $R^1$ are the $C_{6-10}$ monovalent aromatic hydrocarbon groups. If the content of the monovalent aromatic hydrocarbon groups is greater than or equal to the lower limit described above, the mechanical properties of the cured product will increase.

In the formula, "a", "b", "c", and "d" are mole fractions and numbers that satisfy the following conditions: $0 \le a < 0.4$, $0 < b < 0.5$, $0 < c < 1$, $0 \le d < 0.4$, $0.1 \le b/c \le 0.6$, and $a+b+c+d=1$, optionally $a=0$, $0 < b < 0.5$, $0 < c < 1$, $0 \le d < 0.2$, $0.1 < b/c \le 0.6$, and $b+c+d=1$, or optionally $a=0$, $0 < b < 0.5$, $0 < c < 1$, $d=0$, $0.1 < b/c \le 0.6$, and $b+c=1$. "a" is $0 \le a < 0.4$, optionally $0 \le a < 0.2$, or optionally $a=0$, because the molecular weight of the epoxy-containing organopolysiloxane resin (A) drops when there are too many $(R^1{}_3SiO_{1/2})$ siloxane units, and, when $(SiO_{4/2})$ siloxane units are introduced, the hardness of the cured product of the epoxy-functional organopolysiloxane resin (A) is markedly increased and the product can be easily rendered brittle. For

this reason, "d" is $0 \le d < 0.4$, optionally $0 \le d < 0.2$, or optionally d=0. In addition, the molar ratio "b/c" of the ($R^1_2SiO_{2/2}$) units and ($R^1SiO_{3/2}$) units can be not less than about 0.1 and not more than about 0.6. In some examples, deviation from this range in the manufacture of the epoxy-functional silicone resin (A) can result in generation of insoluble side products, in making the product more prone to cracking due to decreased toughness, or in a decrease in the strength and elasticity of the product and making it more prone to scratching. In some examples, the range molar ratio "b/c" is more than about 0.1 and not more than about 0.6. The epoxy-functional organopolysiloxane resin (A) contains the ($R^1_2SiO_{2/2}$) siloxane units and the ($R^1SiO_{3/2}$) siloxane units, and its molecular structure is in most cases a network structure or a three-dimensional structure because the molar ratio of "b/c" is more than about 0.1 and not more than about 0.6. Thus, in the epoxy-functional organopolysiloxane resin (A), the ($R^1_2SiO_{2/2}$) siloxane units and the ($R^1SiO_{3/2}$) siloxane units are present, whereas the ($R^1_3SiO_{1/2}$) siloxane units and the ($SiO_{4/2}$) siloxane units are optional constituent units. That is, there can be epoxy-functional organopolysiloxane resins including the following average unit formulas:

$$(R^1_2SiO_{2/2})_3(R^1SiO_{3/2})_c$$

$$(R^1_3SiO_{1/2})_a(R^1_2SiO_{2/2})_b(R^1SiO_{3/2})_c$$

$$(R^1_2SiO_{2/2})_b(R^1SiO_{3/2})_c(SiO_{4/2})_d$$

$$(R^1_3SiO_{1/2})_a(R^1_2SiO_{2/2})_b(R^1SiO_{3/2})_c(SiO_{4/2})_d$$

In component (A), about 2 to about 30 mol% of siloxane units, optionally about 10 mol% to about 30 mol%, or optionally about 15 mol% to about 30 mol%, of all the siloxane units in a molecule have epoxy-substituted organic groups. If there is greater than or equal to the lower limit of the range mentioned above of such siloxane units, the density of cross-linking during curing can increase. On the other hand, the amount is less than or equal to the upper limit of the range mentioned above can be suitable because it can bring about an increase in the heat resistance of the cured product. In the epoxy-functional monovalent hydrocarbon groups, the epoxy groups can be bonded to silicon atoms through alkylene groups, such that these epoxy groups are not directly bonded to the silicon atoms. The epoxy-functional organopolysiloxane resin (A) can be produced by well-known conventional manufacturing methods.

While there are no particular limitations concerning the weight-average molecular weight of the epoxy-functional organopolysiloxane resin (A), if the toughness of the cured product and its solubility in organic solvents are taken into consideration, in some embodiments the molecular weight is not less than about $10^3$ and not more than about $10^6$. In one embodiment, the epoxy-functional organopolysiloxane resin (A) includes a combination of two or more kinds of such epoxy-functional organopolysiloxane resins with different content and type of the epoxy-containing organic groups and monovalent hydrocarbon groups or with different molecular weights.

Component (B) is an epoxy-functional organosiloxane oligomer represented by the following general formula:

$$X^1\text{-}R^2_2SiO(SiR^2_2O)_mSiR^2_2\text{-}X^1.$$

In the formula, each $R^2$ is the same or different organic group selected from a $C_{1-6}$ monovalent aliphatic hydrocarbon group and a $C_{6-10}$ monovalent aromatic hydrocarbon group.

Examples of the $C_{1-6}$ monovalent aliphatic hydrocarbon groups in component (B) include $C_{1-6}$ alkyl groups such as methyl groups, ethyl groups, propyl groups, butyl groups, and hexyl groups; $C_{2-6}$ alkenyl groups such as vinyl groups, allyl groups, and hexenyl groups; and $C_{1-6}$ halogenated alkyl groups such as 3-chloropropyl groups and 3,3,3-trifluoropropyl groups. Among these, methyl groups are generally preferred.

Examples of the $C_{6-10}$ monovalent aromatic hydrocarbon groups in component (B) include phenyl groups, tolyl groups, xylyl groups, and naphthyl groups. Among these, phenyl groups are generally preferred.

In component (B), at least about 10 mol%, optionally at least about 20 mol%, optionally at least about 30 mol%, or optionally at least about 40 mol%, of the total $R^2$ are the $C_{6-10}$ monovalent aromatic hydrocarbon groups. If the content of the monovalent aromatic hydrocarbon groups is greater than or equal to the low limit described above, shading property of the cured product can increase as well as mechanical properties of the cured product increase.

In the formula, each $X^1$ is the same or different monovalent epoxy-substituted organic group. Examples of the monovalent epoxy-substituted organic groups for $X^1$ include glycidoxyalkyl groups such as 3-glycidoxypropyl groups, 4-glycidoxybutyl groups and 5-glycidoxypentyl groups; 3,4-epoxycycloalkyl alkyl groups such as 2-(3,4-epoxycyclohexyl) ethyl, 3-(3,4-epoxycyclohexyl)propyl, 2-(3,4-epoxy-3-methylcyclohexyl)-2-methylethyl, 2-(2,3-epoxycyclopentyl)ethyl, and 3-(2,3-epoxycyclopentyl)propyl; and epoxyalkyl groups such as 2,3-epoxypropyl groups, 3,4-epoxybutyl groups, and 4,5-epoxypentyl groups. Among these, 3,4-epoxycycloalkyl alkyl groups are generally preferred.

In the general formula above, "m" is a number of from about 0 to about 100, optionally from about 0 to about 20, or optionally from about 0 to about 10. If "m" is less than or equal to the upper limit of the range described above, shading

property of the cured product can increase.

In especially, due to storage stability of the present composition and shading property of the cured product, component (B) is preferably an epoxy-functional organosiloxane oligomer represented by the following general formula:

$$X^1\text{-}R^2{}_2SiOSiR^2{}_2\text{-}X^1$$

wherein $R^2$ and $X^1$ are as described above.

The state of component (B) at 25°C is not limited, but it is generally a liquid. The viscosity at 25°C of component (B) is not limited; however, the viscosity is generally in a range of from about 5 to about 100 mPa·s. Note that in the present specification, viscosity is the value measured using a type B viscometer according to ASTM D 1084 at 23 ± 2°C.

The content of component (B) is in an amount of from about 5 mass% to about 80 mass%, optionally in an amount of from about 10 mass% to about 80 mass%, optionally in an amount of from about 10 mass% to about 70 mass%, or optionally in an amount of from 20 mass% to about 70 mass%, of the total mass of components (A), (B), (C) and (D). If the content of component (B) is greater than or equal to the lower limit of the range described above, flexibility and impact strength of the cured product can increase. On the other hand, the content is less than or equal to the upper limit of the range described above, toughness and tensile strength of the cured product can increase.

Component (C) is a photoacid generator and/or a thermal acid generator to cure the present composition. Any acid generator that is known by one of skill in the art can be used, such as sulfonium salts, iodonium salts, selenonium salts, phosphonium salts, diazonium salts, para-toluene sulfonates, trichloromethyl-substituted triazines, and trichloromethyl-substituted benzenes.

Examples of sulfonium salts can include salts represented by the formula: $R^c{}_3S^+X^-$. In the formula, $R^c$ can stand for methyl, ethyl, propyl, butyl, and other $C_{1-6}$ alkyl groups; phenyl, naphthyl, biphenyl, tolyl, propylphenyl, decylphenyl, dodecylphenyl, and other $C_{1-24}$ aryl group or substituted aryl groups, and $X^-$ in the formula can represent $SbF_6^-$, $AsF_6^-$, $PF_6^-$, $BF_4^-$, $B(C_6F_5)_4^-$, $HSO_4^-$, $ClO_4^-$, $CF_3SO_3^-$ and other non-nucleophilic non-basic anions.

Examples of iodonium salts can include salts represented by the formula: $R^c{}_2I^+X^-$; examples of selenonium salts can include salts represented by the formula: $R^c{}_3Se^+X^-$; examples of phosphonium salts can include salts represented by the formula: $R^c{}_4P^+X^-$; examples of diazonium salts can include salts represented by the formula: $R^cN_2{}^+X^-$; with the $R^c$ and $X^-$ in the formulas being the same as described herein for $R^c{}_3S^+X^-$.

Examples of para-toluene sulfonates can include compounds represented by the formula: $CH_3C_6H_4SO_3R^{c1}$, with the $R^{c1}$ in the formula standing for organic groups including electron-attracting groups, such as benzoylphenylmethyl groups, phthalimide groups, and the like.

Examples of trichloromethyl-substituted triazines can include compounds represented by $[CC1_3]_2C_3N_3R^{c2}$, with the $R^{c2}$ in the formula standing for phenyl, substituted or unsubstituted phenylethyl, substituted or unsubstituted furanylethynyl, and other electron-attracting groups.

Examples of trichloromethyl-substituted benzenes can include compounds represented by $CCl_3C_6H_3R^cR^{c3}$, with the $R^c$ in the formula being the same as described herein for $R^c{}_3S^+X^-$ and the $R^{c3}$ standing for halogen groups, halogen-substituted alkyl groups, and other halogen-containing groups.

Examples of the acid generator can include, for example, triphenylsulfonium tetrafluoroborate, di(p-tertiary butylphenyl)iodonium hexafluoroantimonate, bis(dodecylphenyl)iodonium hexafluoroantimonate, 4-isopropyl-4'-methyldiphenyliodonium tetrakis(pentafluorophenyl)borate salt, and *p* - chlorophenyldiazonium tetrafluoroborate.

The content of component (C) is in an amount of from about 0.01 mass% to about 5 mass%, optionally in an amount of from about 0.01 mass% to about 2 mass%, or optionally in an amount of from about 0.02 mass% to about 0.8 mass%, or optionally in an amount of from about 0.02 mass% to about 0.5 mass%, of the total mass of components (A), (B), (C) and (D). If the content of component (C) is greater than or equal to the lower limit of the range described above, the curable silicone composition is cured fully. On the other hand, the content is less than or equal to the upper limit of the range described above, mechanical properties of the cured product can increase.

Component (D) is a black azo dye to improve shading property of the cured product. The black azo dye significantly reduces occurrence of particulates, voids, pinholes, and striations in the present composition and extends storage stability of the present composition. The black azo dyes are generally specified by Color Index of Solvent Black 3 to 47. Examples of the black azo dyes include Solvent Black 3, Solvent Black 27, Solvent Black 28, Solvent Black 29, Solvent Black 34, Solvent Black 43 and Solvent Black 46. Among of them, Solvent Black 27 is the most preferred because it not only improves storage stability, but also enhances shading property at thin film of the cured product.

These black azo dyes are commercially available. A preferred black azo dye is Orasol Black RLI, a 1:2 mixture of pigment-chromium, available from Ciba-Geigy. Includes other dyes specified by Solvent Black 3 to Solvent Black 47, especially Solvent Black 35 (Nitrocellulose Varnish Black X50, BASF), Solvent Black 27 (Nitrocellulose Varnish Black X51, BASF), Solvent Black 3 (Neptunium Black X60, BASF), Solvent Black 5 (aniline black X12, BASF), Solvent Black 7 (Neptunium Black NB X14, BASF), Solvent Black 46 (Neptunium A Black X17, BASF), Solvent Black 47 (Neopin Black X58, BASF), Solvent Black 28 (Orasol Black CN, Ciba-Geigy), Solvent Black 29 (Orasol Black RL, Ciba-Geigy), and

Solvent Black 45 (Savinyl Black RLS, Sandoz Corporation).

The content of component (D) is in an amount of from about 0.1 to about 5 mass%, or optionally in an amount of from about 0.5 to about 5 mass%, of the total mass of components (A), (B), (C) and (D). If the content of component (D) is greater than or equal to the lower limit of the range described above, shading properties of the cured product can increase. On the other hand, it is less than or equal to the upper limit of the range described above, curability of the composition can increase, and mechanical properties of the cured product can increase.

The present composition comprises components (A) to (D) described above; however, to impart better mechanical strength to a cured product of the present composition, a photosensitizer, and/or an adhesion promoter other than component (C), and/or an alcohol, and/or an inorganic filler can be contained.

Examples of the photosensitizers include isopropyl-9H-thioxanthen-9-one, anthrone, 1-hydroxycyclohexyl-phenylketone, 2,4-diethyl-9H-thioxanthen-9-one, 2-isopropyl thioxanthene, 2-hydroxy-2-methyl-phenylpropan-1-one, 2,6-bis(1,1-dimethylethyl)-4-methylphenol (BHT), pentaerythritol tetrakis[3-(3,5-di-tert-butyl-4-hydroxyphenyl)propionate], thiodiethylene bis[3-(3,5-di-tert-butyl-4-hydroxyphenyl)propionate], octadecyl-3-(3,5-di-tert-butyl-4-hydroxyphenyl)propionate, 2,4-dimethyl-6-(1-methylpentadecyl)phenol, diethyl[{3,5-bis(1,1-di-tert-butyl-4-hydroxyphenyl)methyl } phosphonate, 3,3',3",5,5',5"-hexane-tert-butyl-4-a,a',a"-(mesitylene-2,4,6-tolyl)tri-p-cresol, 4,6-bis(octylthiomethyl)-o-cresol, ethylenebis(oxyethylene)bis[3-(5-tert-butyl-4-hydroxy-m-tolyl)propionate], and hexamethylene bis[3-(3,5-di-tert-butyl-4-hydroxyphenyl)propionate].

The content of the photosensitizer is not limited, but it is generally in a range of from about 0.001 to about 1 mass%, optionally in a range of from about 0.005 to about 0.5 mass%, or optionally in a range of from about 0.005 to about 0.1 mass%, of the total mass of components (A), (B), (C), (D) and the photosensitizer. If the content of the photosensitizer is greater than or equal to the lower limit of the range described above, curability of the cured product can increase. On the other hand, it is less than or equal to the upper limit of the range described above, mechanical property of the cured product can increase.

Examples of adhesion promoters include epoxy-functional alkoxysilane such as 3-glycidoxypropyltrimethoxysilane, 3-glycidoxypropyltriethoxysilane, 2-(3,4-epoxycyclohexyl)ethyldimethoxysilane, 2-(3,4-epoxycyclohexyl)ethyldiethoxysilane and combinations thereof; unsaturated alkoxysilanes such as vinyltrimethoxysilane, allyltrimethoxysilane, allyltriethoxysilane, hexenyltrimethoxysilane, undecylenyltrimethoxysilane, 3-methacryloyloxypropyl trimethoxysilane, 3-methacryloyloxypropyl triethoxysilane, 3-acryloyloxypropyl trimethoxysilane, 3-acryloyloxypropyl triethoxysilane, and combinations thereof; an epoxy-functional siloxane with silicon atom-bonded alkoxy groups such as a reaction product of a hydroxy-terminated polyorganosiloxane with an epoxy-functional alkoxysilane (e.g. such as one of those described above), or a physical blend of the hydroxy-terminated polyorganosiloxane with the epoxy-functional alkoxysilane. The adhesion promoter may comprise a combination of an epoxy-functional alkoxysilane and an epoxy-functional siloxane. For example, the adhesion promoter is exemplified by a mixture of 3-glycidoxypropyltrimethoxysilane and a reaction product of hydroxy-terminated methylvinylsiloxane with 3-glycidoxypropyltrimethoxysilane, or a mixture of 3-glycidoxypropyltrimethoxysilane and a hydroxy-terminated methylvinylsiloxane, or a mixture of 3-glycidoxypropyltrimethoxysilane and a hydroxy-terminated methylvinyl/dimethylsiloxane copolymer.

The content of the adhesion promoter is not limited, but it is generally in an amount of from about 0.01 to about 5 mass%, or optionally in an amount of from about 0.1 to about 2 mass%, of the total mass of components (A), (B), (C), (D) and the adhesion promoter.

An inorganic filler enhances mechanical strength of a cure product. Examples of the filler include one or more of finely divided treated or untreated precipitated or fumed silica; precipitated or ground calcium carbonate, zinc carbonate; clays such as finely divided kaolin; quartz powder; aluminum hydroxide; zirconium silicate; diatomaceous earth; wollastonite; pyrophylate; and metal oxides such as fumed or precipitated titanium dioxide, cerium oxide, magnesium oxide powder, zinc oxide, and iron oxide.

The content of the filler is not limited, but it is generally in a range of from about 1 to about 90 mass% of the total mass of components (A), (B), (C), (D) and the filler.

The present composition can be cured by irradiation of UV ray (or ultraviolet ("UV") light) and/or heating. For example, low pressure, high pressure or ultrahigh pressure mercury lamp, metal halide lamp, (pulse) xenon lamp, or an electrodeless lamp is useful as an UV lamp.

[Examples]

The curable silicone composition of the present invention will now be described in detail using Practical and Comparative Examples. Note that, in the formulas, "Me", "Pr", "Ph" and "Ep" respectively indicates methyl group, propyl group, phenyl group and 2-(3,4-epoxycyclohexyl)ethyl group. The structure of the epoxy-functional organopolysiloxane resin used in the examples was determined by conducting $^{13}C$ NMR and $^{29}Si$ NMR measurements. The weight-average molecular weight of the epoxy-functional organopolysiloxane resin was calculated using GPC based on comparison with polystyrene standards. Viscosity of epoxy-functional organosiloxane oligomer was measured as follows.

<Viscosity>

Viscosity at 23 ± 2°C was measured by using a type B viscometer (Brookfield HA or HB Type Rotational Viscometer with using Spindle #52 at 5 rpm) according to ASTM D 1084 "Standard Test Methods for Viscosity of Adhesive."

<Practical Examples 1-7 and Comparative Examples 1-5>

The following components were used to prepare curable silicone compositions (mass%) shown in Table 1.
The following epoxy-functional organopolysiloxane resin was used as component (A).
(a1): an epoxy-functional organopolysiloxane resin with a weight-average molecular weight of 2,000 to 6,000 and represented by the following average unit formula:

$$(MePhSiO_{2/2})_{0.34}(PrSiO_{3/2})_{0.50}(EpSiO_{3/2})_{0.16}$$

The following organopolysiloxanes were used as polymers for comparison of component (A).

(a2): a methylphenylpolysiloxane end-blocked with dimethylvinylsiloxy groups at both molecular chain terminals and having a viscosity of 3,500 mPa·s.
(a3): a dimethylpolysiloxane end-blocked with dimethylvinylsiloxy groups at both molecular chain terminals and having a viscosity of 450 mPa·s.

The following epoxy-functional organosiloxane oligomer was used as component (B).
(b1): an epoxy-functional organosiloxane oligomer having a viscosity of 40 mPa·s, a weight-average molecular weight of 382, and represented by the following formula:

$$Ep\text{-}SiMe_2OSiMe_2\text{-}Ep$$

The following cationic photoinitiator was used as component (C).
(c1): 4-isopropyl-4'-methyldiphenyliodonium tetrakis(pentafluorophenyl) borate salt represented by the following formula:

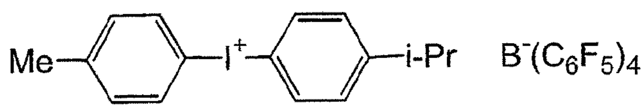

(TR-PAG-30408 from TRONYL)

The following black azo dyes were used as component (D).

(d1): Solvent Black 27 represented by the following formula:

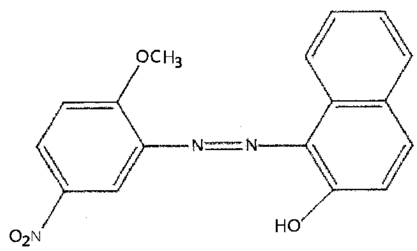

(d2): Solvent Black 28
(d3): Solvent Black 29 represented by the following formula:

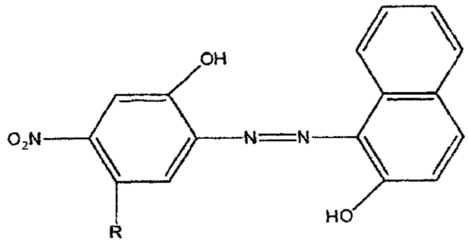

(d4): Solvent Black 34 represented by the following formula:

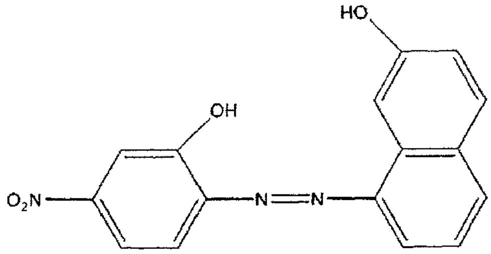

(d5): Solvent Black 43
(d6): Solvent Black 3 represented by the following formula:

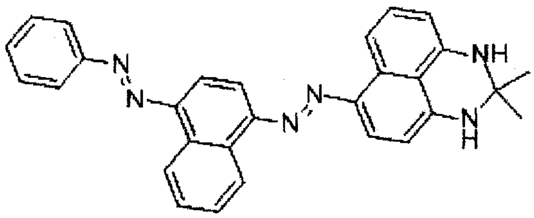

(d7): Solvent Black 46 represented by the following formulas:

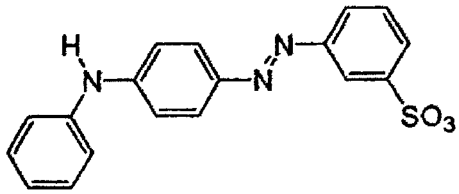

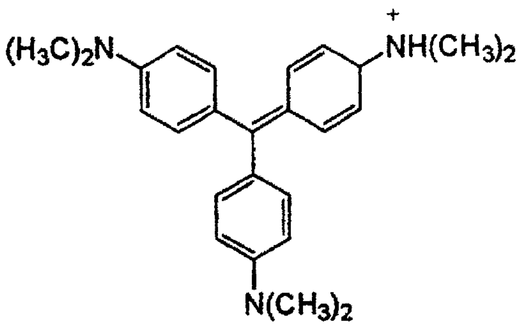

The following carbon black pigment was used as colorants for comparison of component (D).
(d8): a carbon black pigment with BET specific surface area of 8 $m^2/g$ (CORAX® N990 produced by CARY Company)
The following components were used as components (E) for comparison.

(e1): a copolymer of dimethylsiloxane and methylhydrogensiloxane end-blocked trimethylsiloxy groups at both

molecular chain terminals and having a viscosity of 5 mPa·s
(e2): a platinum complex with 1,3-diethenyl-1,1,3,3-tetramethyldisiloxane
(e3): tris[(1,1-dimethyl-2-propynyl)oxy]methylsilane
(e4): ethanol

Curable silicone compositions were prepared by the following steps:

1. loading all raw materials in the 200 mL polyethylene cup;
2. mixing the raw materials at 1500 rpm by a mixer (Thinky ARV-310P) for 2 mins. without vacuuming air;
3. scraping the wall and Bottom of the polyethylene cup;
4. mixing again under the same condition mentioned above;
5. taking out the curable silicone composition.

The curable silicone compositions were cured at 150°C for 1hr. The curable silicone compositions and the cured products were evaluated as follows. The properties thereof are shown in Table 1.

<Sedimentation/Separation>

Sedimentation/Separation of the curable silicone composition was observed visually.

<Shrinkage/Mura>

Shrinkage of the cured product was evaluated by checking the height (level) thereof after curing the curable silicone composition in a vial. Mura of the cured product was observed visually.

<Average OD>

The curable silicone composition was sandwiched between two glass structures and was cured at 150°C for 1hr. Thickness of the cured product was 100 μm. Then, the optical density of cured product with the glass structures was measured. Average value of Optical Density (OD) from visible range wavelengths (360 nm to 740 nm) was calculated by using a transmittance measurement (CM-3600A Spectrophotometer produced by Konica Minolta).

[Table 1]

| | | | Practical Examples | | | | | | |
|---|---|---|---|---|---|---|---|---|---|
| | | | 1 | 2 | 3 | 4 | 5 | 6 | 7 |
| Curable silicone composition (parts by mass) | (A) | (a1) | 36.0 | 36.0 | 36.0 | 36.0 | 36.0 | 36.0 | 36.0 |
| | (B) | (b1) | 60.0 | 60.0 | 60.0 | 60.0 | 60.0 | 60.0 | 60.0 |
| | (C) | (c1) | 0.05 | 0.05 | 0.05 | 0.05 | 0.05 | 0.05 | 0.05 |
| | (D) | (d1) | 4.0 | 0 | 0 | 0 | 0 | 0 | 0 |
| | | (d2) | 0 | 4.0 | 0 | 0 | 0 | 0 | 0 |
| | | (d3) | 0 | 0 | 4.0 | 0 | 0 | 0 | 0 |
| | | (d4) | 0 | 0 | 0 | 4.0 | 0 | 0 | 0 |
| | | (d5) | 0 | 0 | 0 | 0 | 4.0 | 0 | 0 |
| | | (d6) | 0 | 0 | 0 | 0 | 0 | 4.0 | 0 |
| | | (d7) | 0 | 0 | 0 | 0 | 0 | 0 | 4.0 |
| Sedimentation / Separation | | | None | None | None | None | None | None | None |
| Shrinkage / Mura | | | None | None | None | None | None | None | None |
| Average OD | | | 4.09 | 4.19 | 4.02 | 4.05 | 4.07 | 4.11 | 4.16 |

[Table 1] (Continued)

| | | | Comparative Examples | | | | |
|---|---|---|---|---|---|---|---|
| | | | 1 | 2 | 3 | 4 | 5 |
| Curable silicone composition (parts by mass) | (A) | (a1) | 13.0 | 0 | 0 | 0 | 0 |
| | | (a2) | 0 | 90.3 | 0 | 85.7 | 90.3 |
| | | (a3) | 0 | 0 | 95.4 | 0 | 0 |
| | (B) | (b1) | 85.0 | 0 | 0 | 0 | 0 |
| | (C) | (c1) | 0.05 | 0 | 0 | 0 | 0 |
| | (D) | (d1) | 2.0 | 2.0 | 2.0 | 2.0 | 0 |
| | | (d8) | 0 | 0 | 0 | 0 | 2.0 |
| | (E) | (e1) | 0 | 7.6 | 2.5 | 7.2 | 7.6 |
| | | (e2) | 0 | 0.05 | 0.05 | 0.05 | 0.05 |
| | | (e3) | 0 | 0.02 | 0.02 | 0.02 | 0.02 |
| | | (e4) | 0 | 0 | 0 | 5 | 0 |
| Sedimentation / Separation | | | None | Observed | Observed | None | Observed |
| Shrinkage / Mura | | | None | None | None | Observed | Observed |
| Average OD | | | NA (Micro cracks were observed) | NA | NA | NA | NA |

**Industrial Applicability**

The curable silicone composition of the present invention can be cured to form a cured product exhibiting good to excellent shading property without causing shrinkage and "MURA" defects. Therefore, the present composition is useful as black gapfill materials for LED display applications.

**Claims**

1. A curable silicone composition comprising:

(A) an epoxy-functional organopolysiloxane resin represented by the following average unit formula:

$$(R^1{}_3SiO_{1/2})_a(R^1{}_2SiO_{2/2})_b(R^1SiO_{3/2})_c(SiO_{4/2})_d$$

wherein each $R^1$ is the same or different organic group selected from a $C_{1-6}$ monovalent aliphatic hydrocarbon group, a $C_{6-10}$ monovalent aromatic hydrocarbon group, and a monovalent epoxy-substituted organic group, provided that at least about 15 mol% of the total $R^1$ are the $C_{6-10}$ monovalent aromatic hydrocarbon groups; and "a", "b", "c", and "d" are numbers that satisfy the following conditions: $0 \le a < 0.4$, $0 < b < 0.5$, $0 < c < 1$, $0 \le d < 0.4$, $0.1 \le b/c \le 0.6$, and $a+b+c+d=1$; and about 2 to about 30 mol% of the total siloxane units have the monovalent epoxy-substituted organic groups;

(B) an epoxy-functional organosiloxane oligomer represented by the following general formula:

$$X^1\text{-}R^2{}_2SiO(SiR^2{}_2O)_mSiR^2{}_2\text{-}X^1$$

wherein each $R^2$ is the same or different organic group selected from a $C_{1-6}$ monovalent aliphatic hydrocarbon group and a $C_{6-10}$ monovalent aromatic hydrocarbon group; each $X^1$ is the same or different monovalent epoxy-substituted organic group; and "m" is a number of from about 0 to about 100, in an amount of from about 5 mass% to about 80 mass% of the total mass of components (A), (B), (C) and (D);
(C) a photoacid generator and/or a thermal acid generator, in an amount of from about 0.01 mass% to about 5 mass% of the total mass of components (A), (B), (C) and (D); and
(D) a black azo dye, in an amount of from about 0.1 mass% to about 5 mass% of the total mass of components (A), (B), (C) and (D).

2. The curable silicone composition according to claim 1, wherein the monovalent epoxy-substituted organic groups in component (A) are groups selected from glycidoxyalkyl groups, 3,4-epoxycyclohexylalkyl groups, and epoxyalkyl groups.

3. The curable silicone composition according to claim 1, wherein the monovalent epoxy-substituted organic groups in component (B) are groups selected from glycidoxyalkyl groups, 3,4-epoxycyclohexylalkyl groups, and epoxyalkyl groups.

4. The curable silicone composition according to claim 1, wherein component (B) is an epoxy-functional organosiloxane oligomer represented by the following general formula:

$$X^1\text{-}R^2{}_2SiOSiR^2{}_2\text{-}X^1$$

wherein $R^2$ and $X^1$ are as described above.

5. The curable silicone composition according to claim 1, wherein component (D) is a black azo dye selected from Solvent Black 3, Solvent Black 27, Solvent Black 28, Solvent Black 29, Solvent Black 34, Solvent Black 43 and Solvent Black 46.

**Patentansprüche**

1. Härtbare Silikonzusammensetzung, umfassend:

(A) ein epoxidfunktionelles Organopolysiloxanharz, das durch die folgende durchschnittliche Einheitsformel dargestellt wird:

$$(R^1{}_3SiO_{1/2})_a(R^1{}_2SiO_{2/2})_b(R^1SiO_{3/2})_c(SiO_{4/2})_d$$

wobei jedes $R^1$ dieselbe oder eine andere organische Gruppe ist, ausgewählt aus einer einwertigen aliphatischen $C_{1-6}$-Kohlenwasserstoffgruppe, einer einwertigen aromatischen $C_{6-10}$-Kohlenwasserstoffgruppe und einer einwertigen epoxidsubstituierten organischen Gruppe, vorausgesetzt, dass mindestens etwa 15 Mol-% der gesamten $R^1$ die einwertigen aromatischen $C_{6-10}$-Kohlenwasserstoffgruppen sind; und "a", "b", "c" und "d" Zahlen sind, die die folgenden Bedingungen erfüllen: $0 \leq a < 0{,}4$, $0 < b < 0{,}5$, $0 < c < 1$, $0 \leq d < 0{,}4$, $0{,}1 \leq b/c \leq 0{,}6$ und $a+b+c+d=1$; und etwa 2 bis etwa 30 Mol-% der gesamten Siloxaneinheiten die einwertigen epoxidsubstituierten organischen Gruppen aufweisen;
(B) ein epoxidfunktionelles Organosiloxanoligomer, das durch die folgende allgemeine Formel dargestellt wird:

$$X^1\text{-}R^2{}_2SiO(SiR^2{}_2O)_mSiR^2{}_2\text{-}X^1$$

wobei jedes $R^2$ dieselbe oder eine andere organische Gruppe ist, ausgewählt aus einer einwertigen aliphatischen $C_{1-6}$-Kohlenwasserstoffgruppe und einer einwertigen aromatischen $C_{6-10}$-Kohlenwasserstoffgruppe; jedes $X^1$ dieselbe oder eine andere einwertige, epoxidsubstituierte organische Gruppe ist; und "m" eine Zahl von etwa 0 bis etwa 100 ist, in einer Menge von etwa 5 Masse-% bis etwa 80 Masse-% der Gesamtmasse der Komponenten (A), (B), (C) und (D); (C) einen Foto-Säuregenerator und/oder einen thermischen Säuregenerator in einer Menge von etwa 0,01 Masse-% bis etwa 5 Masse-% der Gesamtmasse der Komponenten (A), (B), (C) und (D); und
(D) einen schwarzen Azofarbstoff in einer Menge von etwa 0,1 Masse-% bis etwa 5 Masse-% der Gesamtmasse der Komponenten (A), (B), (C) und (D).

2. Härtbare Silikonzusammensetzung nach Anspruch 1, wobei die einwertigen epoxidsubstituierten organischen Gruppen in Komponente (A) Gruppen sind, ausgewählt aus Glycidoxyalkylgruppen, 3,4-Epoxycyclohexylalkylgruppen und Epoxyalkylgruppen.

3. Härtbare Silikonzusammensetzung nach Anspruch 1, wobei die einwertigen epoxidsubstituierten organischen Gruppen in Komponente (B) Gruppen sind, ausgewählt aus Glycidoxyalkylgruppen, 3,4-Epoxycyclohexylalkylgruppen und Epoxyalkylgruppen.

4. Härtbare Silikonzusammensetzung nach Anspruch 1, wobei Komponente (B) ein epoxidfunktionelles Organosiloxanoligomer ist, das durch die folgende allgemeine Formel dargestellt wird:

$$X^1\text{-}R^2{}_2SiOSiR^2{}_2\text{-}X^1$$

wobei $R^2$ und $X^1$ wie oben beschrieben sind.

5. Härtbare Silikonzusammensetzung nach Anspruch 1, wobei Komponente (D) ein schwarzer Azofarbstoff ist, ausgewählt aus Solvent Black 3, Solvent Black 27, Solvent Black 28, Solvent Black 29, Solvent Black 34, Solvent Black 43 und Solvent Black 46.

## Revendications

1. Composition de silicone durcissable comprenant :

(A) une résine d'organopolysiloxane à fonctionnalité époxy représentée par la formule unitaire moyenne suivante :

$$(R^1{}_3SiO_{1/2})_a(R^1{}_2SiO_{2/2})_b(R^1SiO_{3/2})_c(SiO_{4/2})_d$$

dans laquelle chaque $R^1$ est un groupe organique identique ou différent choisi parmi un groupe hydrocarboné aliphatique monovalent en $C_{1-6}$, un groupe hydrocarboné aromatique monovalent en $C_{6-10}$, et un groupe organique monovalent à substitution époxy, à condition qu'au moins environ 15 % molaires du total des $R^1$ soient les groupes hydrocarbonés aromatiques monovalents en $C_{6-10}$ ; et « a », « b », « c », et « d » sont des nombres qui satisfont les conditions suivantes : $0 \leq a < 0{,}4$, $0 < b < 0{,}5$, $0 < c < 1$, $0 \leq d < 0{,}4$, $0{,}1 \leq b/c \leq 0{,}6$, et $a + b + c + d = 1$ ; et environ 2 à environ 30 % molaires du total des motifs siloxane ont les groupes organiques monovalents à substitution époxy ;
(B) un oligomère à fonctionnalité époxy représenté par la formule générale suivante :

$$X^1\text{-}R^2{}_2SiO(SiR^2{}_2O)_mSiR^2{}_2\text{-}X^1$$

dans laquelle chaque $R^2$ est un groupe organique identique ou différent choisi parmi un groupe hydrocarboné aliphatique monovalent en $C_{1-6}$ et un groupe hydrocarboné aromatique monovalent en $C_{6-10}$ ; chaque $X^1$ est un groupe organique monovalent à substitution époxy, identique ou différent ; et « m » est un nombre allant d'environ 0 à environ 100, en une quantité allant d'environ 5 % en masse à environ 80 % en masse de la masse totale des composants (A), (B), (C) et (D) ; (C) un générateur de photo-acide et/ou un générateur d'acide thermique, en une quantité allant d'environ 0,01 % en masse à environ 5 % en masse de la masse totale des composants (A), (B), (C) et (D) ; et
(D) un colorant azoïque noir, en une quantité allant d'environ 0,1 % en masse à environ 5 % en masse de la masse totale des composants (A), (B), (C) et (D).

2. Composition de silicone durcissable selon la revendication 1, dans laquelle les groupes organiques monovalents à substitution époxy dans le composant (A) sont des groupes choisis parmi des groupes glycidoxyalkyle, des groupes 3,4-époxycyclohexylalkyle, et des groupes époxyalkyle.

3. Composition de silicone durcissable selon la revendication 1, dans laquelle les groupes organiques monovalents à substitution époxy dans le composant (B) sont des groupes choisis parmi des groupes glycidoxyalkyle, des groupes 3,4-époxycyclohexylalkyle, et des groupes époxyalkyle.

**4.** Composition de silicone durcissable selon la revendication 1, dans laquelle le composant (B) est un oligomère organosiloxane à fonctionnalité époxy représenté par la formule générale suivante :

$$X^1\text{-}R^2{}_2SiOSiR^2{}_2\text{-}X^1$$

dans laquelle $R^2$ et $X^1$ sont tels que décrits ci-dessus.

**5.** Composition de silicone durcissable selon la revendication 1, dans laquelle le composant (D) est un colorant azoïque noir choisi parmi Solvent Black 3, Solvent Black 27, Solvent Black 28, Solvent Black 29, Solvent Black 34, Solvent Black 43 et Solvent Black 46.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20070287771 A1
- US 20100103507 A1
- US 20140154626 A1
- EP 3760660 A